# DEMANDE DE BREVET EUROPEEN

(11) **EP 0 631 075 A1**
(43) Date de publication de la demande: **28.12.1994**
(21) Numéro de dépôt: 94401328.3
(22) Date de dépôt: 14.06.1994
(51) Int. Cl.: F16K 31/06, F16K 1/44

(54) **Electrovanne à double siège, et circuit de recyclage de vapeurs d'essence comportant un tel clapet**

(30) Priorité: 16.06.1993 FR 9307251
(71) Demandeur: SAGEM ALLUMAGE Société Anonyme, F-75783 Paris Cédex 16 (FR)
(72) Inventeur: Perez, Thierry, F-43250 Sainte Florine (FR)
(74) Mandataire: Bloch, Gérard

(57) **Abrégé**

Clapet pour électrovanne comportant un siège (3) et une bobine (4) d'électro-aimant, ledit clapet comprenant l'extrémité libre (10) d'un noyau (8) mobile à l'intérieur du moyeu (5) de ladite bobine. Il comprend en outre un organe intermédiaire (12) susceptible de venir en appui sur ledit siège et comportant lui-même un deuxième siège (16), en vis-à-vis du premier siège et de section (S1) plus faible que celle (S2) du premier siège, ladite extrémité libre du noyau mobile étant susceptible de venir en appui sur ledit deuxième siège et le noyau mobile étant agencé pour entraîner l'organe intermédiaire à l'écart du premier siège après une course prédéterminée (C1) de son extrémité libre à l'écart du deuxième siège.

## Description

La présente invention concerne un clapet pour électrovanne comportant un siège et une bobine d'électro-aimant, ledit clapet comprenant l'extrémité libre d'un noyau mobile à l'intérieur du moyeu de ladite bobine, ainsi qu'un circuit de recyclage de vapeurs d'essence comportant un tel clapet.

Dans les clapets de ce type, la bobine de l'électro-aimant est généralement alimentée en courant haché de période constante et de rapport cyclique variable, le rapport cyclique étant défini comme le rapport de la durée pendant laquelle, au cours d'une période, la tension est au niveau haut à la durée de la période. L'extrémité libre du noyau mobile forme un clapet dont la position varie en fonction de la dépression en aval de l'électrovanne et du rapport cyclique d'ouverture, entre une position de fermeture où cette extrémité libre est en appui sur le siège et ferme par conséquent l'électrovanne, jusqu'à une position le plus à l'écart du siège où le débit est maximum. Bien entendu, le débit est fonction à la fois de l'écartement entre le clapet et le siège ainsi que de la dépression régnant entre l'intérieur et l'extérieur de l'électrovanne.

Le problème qui se pose est celui de la linéarité de la relation entre le débit et la course à dépression donnée, tout particulièrement pour les faibles rapports cycliques d'ouverture. En particulier, les électrovannes connues du type précité ont généralement un débit instable et non reproductible pour les faibles courses.

La présente invention vise à palier cet inconvénient.

A cet effet, l'invention a tout d'abord pour objet un clapet pour électrovanne comportant un siège et une bobine d'électro-aimant, ledit clapet comprenant l'extrémité libre d'un noyau mobile à l'intérieur du moyeu de ladite bobine, caractérisé par le fait qu'il, comprend en outre un organe intermédiaire susceptible de venir en appui sur ledit siège et comportant lui-même un deuxième siège en vis-à-vis du premier siège et de section plus faible que celle du premier siège, ladite extrémité libre du noyau mobile étant susceptible de venir en appui sur ledit deuxième siège et le noyau mobile étant agencé pour entraîner l'organe intermédiaire à l'écart du premier siège après une course prédéterminée de son extrémité libre à l'écart du deuxième siège.

L'organe intermédiaire provoquant une ouverture de l'électrovanne en deux temps, augmente la progessivité du débit en fonction du rapport cyclique d'ouverture, tout particulièrement pour les faibles rapports cycliques. Il abaisse par conséquent la longueur de la course pendant laquelle le débit est incertain.

Dans un mode de réalisation particulier, ledit organe intermédiaire forme un joint muni d'un orifice central formant ledit deuxième siège, solidaire d'un étrier susceptible de coopérer avec une saillie du noyau mobile pour entraîner le joint après ladite course prédéterminée.

Plus particulièrement, l'organe intermédiaire peut former une cage dont le joint forme un des fonds et dont l'autre fond possède un orifice traversé par l'extrémité libre du noyau mobile, dont la saillie est à l'intérieur de ladite cage.

L'extrémité libre du noyau mobile et le deuxième siège peuvent être coniques.

Dans ce cas, le noyau mobile peut former une tige dont l'extrémité libre forme un cône dont la base possède un diamètre supérieur à celui de la tige de manière à former la saillie précitée.

En revanche, le premier siège peut être un siège plat.

La présente invention a également pour objet un circuit de recyclage des vapeurs d'essence dans un moteur à combustion interne, caractérisé par le fait qu'il comprend une électrovanne possédant un clapet tel que décrit ci-dessus.

Plus particulièrement, l'électrovanne est de préférence fermée aux faibles vitesses de rotation du moteur et est susceptible de s'ouvrir progressivement lorsque cette vitesse augmente.

On décrira maintenant, à titre d'exemple non limitatif, un mode de réalisation particulier de l'invention en référence aux dessins schématiques annexés dans lesquels :
- les figs. 1a, 1b et 1c représentent un clapet selon l'invention dans trois positions d'ouverture différentes ; et
- la fig. 2 illustre un circuit de recyclage de vapeurs d'essence.

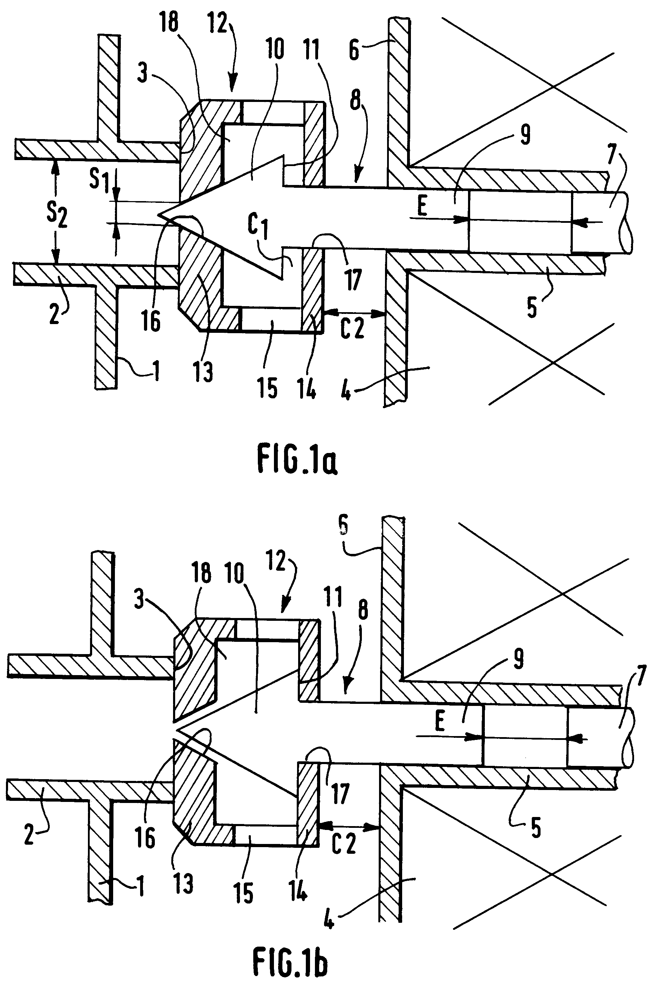

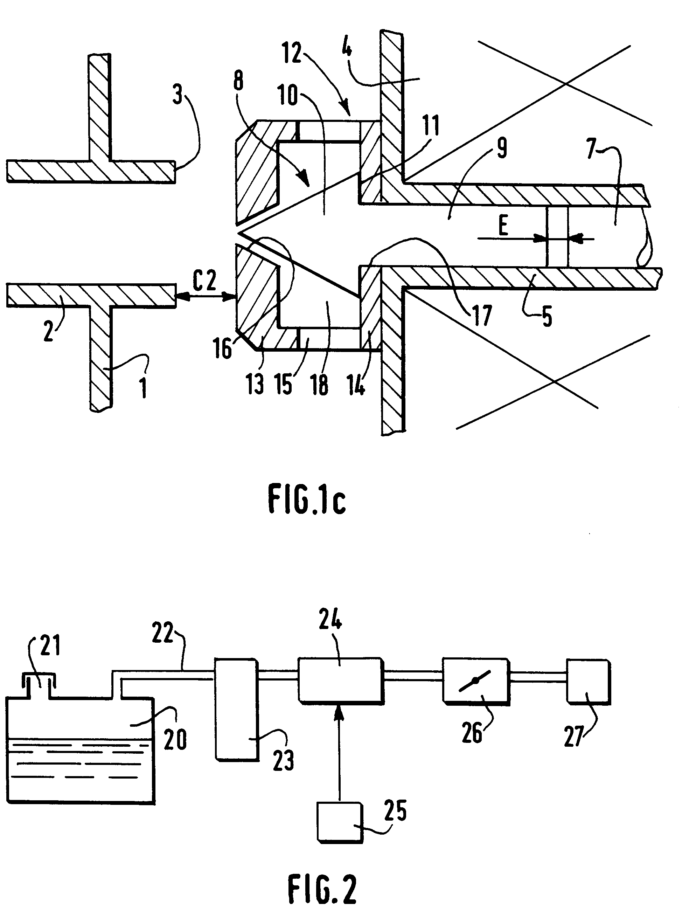

Les figures 1 représentent une électrovanne munie d'un boîtier fermé 1 muni d'un orifice de sortie 2 formant à l'intérieur du boîtier un siège annulaire plat 3. A l'intérieur du boîtier, une bobine d'électro-aimant 4 est enroulée sur le moyeu 5 d'un bobineau 6 en matière plastique.

A l'intérieur du moyeu 5 est disposé un noyau magnétique fixe 7 et un noyau mobile 8 distant axialement d'une longueur variable E définissant l'entrefer de la bobine. Plus l'entrefer E est faible, et plus est forte pour un rapport cyclique d'alimentation de la bobine donné, la force d'attraction du noyau mobile par le noyau fixe 7.

Le noyau mobile 8 est formé d'une tige 9 cylindrique dont une extrémité est engagée dans le moyeu 5 du bobineau 6 et dont l'extrémité libre 10 est en forme de cône dont la base est d'un diamètre supérieur à celui de la tige 9 de manière à former un épaulement 11.

Selon l'invention, un organe intermédiaire 12 est prévu entre l'extrémité libre 10 du noyau mobile 8 et le siège 3 de l'ouverture 2.

L'organe intermédiaire 12 présente sensiblement une forme de cage cylindrique dont un fond 13 forme un joint pour l'orifice annulaire 3 et dont l'autre fond 14 est relié au fond 13 par des barreaux 15 orientés axialement. Le joint 13 possède, en son centre, une ouverture tronconique 16 de même conicité que l'extrémité libre 10 du noyau mobile 8, coaxiale à la portée du siège 3, et dont l'ouverture extérieure a une surface S1 inférieure à la surface S2 de l'orifice de sortie 2. Le fond 14 possède un orifice cylindrique 17 de diamètre très légèrement inférieur à celui de la tige 9 de manière à permettre son coulissement, l'extrémité libre conique de l'organe intermédiaire 8 étant disposée dans l'espace 18 intérieur à la cage 12.

Dans la position représentée à la figure 1a, le joint 13 de l'organe intermédiaire 12 est en contact avec le siège 3 et l'extrémité conique 10 du noyau mobile 8 est en contact avec le siège 16. Dans cette position, l'épaulement 11 de l'extrémité conique 10 est à une distance C1 du fond 14 de l'organe intermédiaire 12, lequel fond 14 est à une distance C2 du bobineau 6.

Lorsque la force d'attraction magnétique exercée sur le noyau mobile 8 devient supérieure à l'action de la dépression sur la surface S1, l'extrémité conique 10 s'éloigne du siège 16 laissant ainsi passer un certain débit de fluide par la section entre la surface 16 et le cône 10. Il en résulte une diminution de la dépression mais celle-ci demeure néanmoins, continuant donc à maintenir le joint 13 plaqué sur le siège 3.

Lorsque le noyau mobile 8 a effectué une course C1, l'épaulement 11 vient en contact avec le fond 14 de l'organe intermédiaire 12 comme représenté à la figure 1b. Lorsque les forces d'attraction magnétiques sur le noyau mobile 8 continuent à augmenter par la diminution de E, ce noyau continue à pénétrer dans le moyeu 5 de la bobine entrainant par conséquent l'organe intermédiaire 12 à l'écart du siège 3 et dégageant ainsi une section de passage égale à S2 pour le débit de fluide.

La figure 1c représente l'ouverture maximale du clapet lorsque le noyau mobile 8 a effectué une course égale à C1 + C2.

La figure 2 montre un réservoir 20 d'essence pour moteur à combustion interne, et notamment pour moteur de véhicule automobile. Le réservoir 20 possède un orifice 21 de remplissage ainsi qu'un autre orifice d'où part une canalisation 22 dont l'autre extrémité est reliée à un piège à vapeurs d'essence 23 à charbon actif. La sortie du piège 23 est reliée à l'entrée d'une électrovanne 24 du type de celle qui vient d'être décrite. Cette électrovanne 24 est commandée par un calculateur 25.

La sortie de l'électrovanne 24 est reliée à l'entrée d'une vanne papillon 26, à laquelle arrive par ailleurs l'air et l'essence et dont la sortie est reliée de façon connue à la rampe 27 d'alimentation des injecteurs du moteur.

Le calculateur 25 commande, en fonction de la vitesse de rotation du moteur, le rapport cyclique du courant haché alimentant la bobine 4 et commande ainsi le débit de vapeurs d'essence dans l'électrovanne 24. Cette électrovanne est fermée au repos, c'est-à-dire lorsque le moteur est au repos ou tourne au ralenti, puis s'ouvre progressivement par augmentation du rapport cyclique lorsque la vitesse de rotation du moteur augmente, dans la mesure où le calculateur en effectue la demande.

Ainsi, la dépression en aval de l'électrovanne 24 participe à son maintien en position fermée, de telle sorte qu'aucun ressort n'est nécessaire pour l'amener dans cette position. Ensuite, la progressivité de la fuite conditionne le débit de recyclage autorisé lorsque le rapport cyclique augmente.

Grâce au clapet à double effet de l'invention, on facilite la naissance du débit dans l'électrovanne 24 ainsi que sa linéarité aux très faibles débits.

Bien entendu, le clapet de l'invention pourrait être intégré, soit au piège à vapeurs d'essence 23, soit à la vanne papillon 26.

## Revendications

1. Clapet pour électrovanne comportant un siège (3) et une bobine (4) d'électro-aimant, ledit clapet comprenant l'extrémité libre (10) d'un noyau (8) mobile à l'intérieur du moyeu (5) de ladite bobine, caractérisé par le fait qu'il comprend en outre un organe intermédiaire (12) susceptible de venir en appui sur ledit siège et comportant lui-même un deuxième siège (16), en vis-à-vis du premier siège et de section (S1) plus faible que celle (S2) du premier siège, ladite extrémité libre du noyau mobile étant susceptible de venir en appui sur ledit deuxième siège et le noyau mobile étant agencé pour entraîner l'organe intermédiaire à l'écart du premier siège après une course prédéterminée (C1) de son extrémité libre à l'écart du deuxième siège.

2. Clapet selon la revendication 1, dans lequel ledit organe intermédiaire forme un joint (13) muni d'un orifice (16) central formant ledit deuxième siège, solidaire d'un étrier (14, 15) susceptible de coopérer avec une saillie (11) du noyau mobile pour entraîner le joint après ladite course prédéterminée.

3. Clapet selon la revendication 2, dans lequel l'organe intermédiaire forme une cage dont le joint forme un des fonds et dont l'autre fond (14) possède un orifice (17) traversé par l'extrémité libre du noyau mobile dont la saillie est à l'intérieur (18) de ladite cage.

4. Clapet selon l'une quelconque des revendications 1 à 3, dans lequel l'extrémité libre du noyau mobile et le deuxième siège sont coniques.

5. Clapet selon l'ensemble des revendications 3 et 4, dans lequel le noyau mobile forme une tige (9) dont l'extrémité libre forme un cône dont la base possède un diamètre supérieur à celui de la tige.

6. Clapet selon l'une quelconque des revendications 1 à 5, dans lequel le premier siège est un siège plat.

7. Circuit de recyclage des vapeurs d'essence dans un moteur à combustion interne, caractérisé par le fait qu'il comprend une électrovanne possédant un clapet selon l'une quelconque des revendications 1 à 6.

8. Circuit selon la revendication 7, dans lequel l'électrovanne est fermée aux faibles vitesses de rotation du moteur, et est susceptible de s'ouvrir progressivement lorsque cette vitesse augmente.
